# EUROPÄISCHE PATENTSCHRIFT

(11) **EP 3 424 302 B1**
(45) Veröffentlichungstag und Bekanntmachung des Hinweises auf die Patenterteilung: **30.08.2023**
(21) Anmeldenummer: 17179677.4
(22) Anmeldetag: 04.07.2017
(51) Int. Cl.: A01G 23/00

(54) **VERFAHREN ZUM ERMITTELN EINER ORIENTIERUNG MINDESTENS EINES ABSCHNITTS EINES GEFÄLLTEN BAUMS UND FORSTSYSTEM ZUM ERMITTELN EINER ORIENTIERUNG MINDESTENS EINES ABSCHNITTS EINES GEFÄLLTEN BAUMS**
METHOD FOR DETERMINING AN ORIENTATION OF AT LEAST ONE SECTION OF A FELLED TREE AND FOREST SYSTEM FOR DETERMINING THE ORIENTATION OF AT LEAST ONE SECTION OF A FELLED TREE
PROCÉDÉ DE DÉTERMINATION D'UNE ORIENTATION D'AU MOINS UN TRONÇON D'UN ARBRE ABATTU ET SYSTÈME FORESTIER DESTINÉ À DÉTERMINER UNE ORIENTATION D'AU MOINS UN TRONÇON D'UN ARBRE ABATTU

(43) Veröffentlichungstag der Anmeldung: 09.01.2019
(73) Patentinhaber: Andreas Stihl AG & Co. KG, 71336 Waiblingen (DE)
(72) Erfinder: Mang, Harald, 71364 Winnenden (DE); Frey, Benjamin, 73663 Berglen (DE); Reinert, Michael, 73635 Rudersberg (DE); Jaeger, Dirk, 35116 Hatzfeld (DE); Maier, Bettina, 72072 Tübingen (DE)
(74) Vertreter: Patentanwälte Ruff, Wilhelm, Beier, Dauster & Partner mbB

(56) Entgegenhaltungen:
- EP-A1- 3 141 108
- WO-A1-2017/167783
- CA-A1- 2 330 979
- US-A1- 2005 197 175
- US-A1- 2014 238 545
- US-A1- 2017 086 394
- Ilze79: "Téléphone, bûcheron, forêt, tronçonneuse, conversation.", , 11 March 2016 (2016-03-11), XP055640173, Retrieved from the Internet: URL:https://www.canstockphoto.fr/téléphone -bûcheron-forêt-41517492.html [retrieved on 2019-11-07]

## Beschreibung

### ANWENDUNGSGEBIET

Die Erfindung bezieht sich auf ein Verfahren zum Ermitteln einer Orientierung mindestens eines Abschnitts eines gefällten Baums und ein Forstsystem zum Ermitteln einer Orientierung mindestens eines Abschnitts eines gefällten Baums.

Insbesondere ist aus der US 2017/0086394 A1 eine Baum-Fäll- und Zusammenrückmaschine bekannt, die einen gefällten Baum in einem Stapel platziert. Dabei wird eine Orientierung des gefällten Baums berechnet. Basierend auf der Orientierung von Bäumen in dem Stapel wird ein optimierter Pfad für einen Forwarder zum Stapel berechnet und kommuniziert.

### AUFGABE UND LÖSUNG

Der Erfindung liegt als Aufgabe die Bereitstellung eines Verfahrens zum Ermitteln einer Orientierung mindestens eines Abschnitts eines gefällten Baums und eines Forstsystems zum Ermitteln einer Orientierung mindestens eines Abschnitts eines gefällten Baums zugrunde, das jeweils benutzerfreundlich ist und/oder ein einfaches Weiterverarbeiten des Abschnitts ermöglicht.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein Forstsystem mit den Merkmalen des Anspruchs 5 gelöst. Vorteilhafte Weiterbildungen und/oder Ausgestaltungen der Erfindung sind in den abhängigen Ansprüchen beschrieben.

Das erfindungsgemäße, insbesondere automatische, Verfahren zum Ermitteln einer Orientierung mindestens eines Abschnitts eines gefällten Baums weist die Schritte auf: a) Bearbeiten des mindestens einen Abschnitts des gefällten Baums, wobei im Schritt a) der mindestens eine Abschnitt des gefällten Baums mittels eines handgetragenen Forstbearbeitungsgeräts bearbeitet wird. Das Forstbearbeitungsgerät weist ein Schneidwerkzeug auf oder ist ein solches. Das Schneidwerkzeug ist zum Entfernen von Ästen von dem mindestens einen Abschnitt und/oder zum Durchtrennen des Abschnitts ausgebildet.

Im Schritt a) wird der mindestens eine Abschnitt des gefällten Baums durch ein Entfernen von Ästen, soweit vorhanden, von dem Abschnitt und/oder durch ein Durchtrennen des Abschnitts bearbeitet, b) Erfassen, insbesondere automatisches Erfassen, einer Ausrichtung und/oder mehrerer Positionen während des Bearbeitens, wobei im Schritt b) die Ausrichtung und/oder die Positionen des handgetragenen Forstbearbeitungsgeräts erfasst werden/wird und/oder wobei die Ausrichtung eine Ausrichtung eines den Abschnitt bearbeitenden Forstarbeiters ist und/oder wobei die Positionen Positionen des den Abschnitt bearbeitenden Forstarbeiters sind. c) Ermitteln, insbesondere automatisches Ermitteln, von einer Orientierungsinformation betreffend die Orientierung des mindestens einen Abschnitts des gefällten Baums basierend auf der erfassten Ausrichtung und/oder den erfassten Positionen. d) Ausgeben, insbesondere automatisches Ausgeben, der ermittelten Orientierungsinformation.

Das Verfahren ermöglicht das Bearbeiten des Abschnitts und nebenbei die Orientierungsinformation zu ermitteln. Anders formuliert: die Ausrichtung und/oder die Position und/oder die Orientierungsinformation brauchen/braucht nicht, insbesondere zeitlich, getrennt von dem Bearbeiten erfasst und/oder ermittelt zu werden. Dies kann einem Forstarbeiter Zeit ersparen. Zusätzlich oder alternativ ermöglicht das Verfahren dem Forstarbeiter und/oder einem Holfahrzeug zum Holen des Abschnitts basierend auf der ausgegebenen Orientierungsinformation ein einfaches Weiterverarbeiten des Abschnitts. Somit kann ein maximaler wirtschaftlicher Gewinn mit dem Abschnitt erzielt werden.

Das Entfernen von Ästen kann als Entasten bezeichnet werden. Der mindestens eine Abschnitt des Baums kann insbesondere liegend sein. Die Orientierung des Abschnitts kann einer Längsachse des Abschnitts entsprechen.

Die Ausrichtung kann eine Himmelsrichtung beziehungsweise einen Wert und/oder einen Betrag der Himmelsrichtung aufweisen oder sein. Die Position kann Koordinaten beziehungsweise einen Wert und/oder einen Betrag der Koordinaten aufweisen oder sein.

Die erfasste Ausrichtung und/oder die erfasste Position können, insbesondere kabellos beziehungsweise drahtlos, übertragen werden, insbesondere an eine Datenbank und/oder ein Netzwerk und/oder einen Hub und/oder eine Cloud und/oder ähnliches übertragen werden, insbesondere an das Internet. Zusätzlich oder alternativ kann die ermittelte Orientierungsinformation übertragen werden.

Die Orientierungsinformation kann optisch und/oder akustisch und/oder haptisch ausgegeben werden. Insbesondere kann das optische Ausgeben ein Anzeigen aufweisen. Das haptische Ausgeben kann ein Vibrieren aufweisen.

Der Schritt c) kann zeitgleich mit dem Schritt b) und/oder zeitlich nach diesem ausgeführt werden. Der Schritt d) kann zeitgleich mit dem Schritt c) und/oder zeitlich nach diesem ausgeführt werden.

Insbesondere können die mehreren Positionen mehrere Entfernungspositionen beziehungsweise Entastungspositionen und/oder mehrere Durchtrennpositionen beziehungsweise Trennschnittpositionen aufweisen oder sein.

In einer Ausgestaltung der Erfindung weist das Verfahren den Schritt auf: Erfassen, insbesondere automatisches Erfassen, eines Betätigens des Forstbearbeitungsgeräts, insbesondere einer Betätigungseinrichtung des Forstbearbeitungsgeräts. Im Schritt b) werden/wird die Ausrichtung und/oder die Position in Abhängigkeit von dem erfassten Betätigen erfasst, insbesondere nur dann. Somit können die Ausrichtung und/oder die Position relativ aussagekräftig sein. Insbesondere können/kann die Ausrichtung und/oder die Position zeitgleich mit dem Erfassen des Betätigens oder unmittelbar im zeitlichen Anschluss an das erfasste Betätigen erfasst werden. In anderen Worten: im Schritt c) kann die Orientierungsinformation basierend auf der erfassten Ausrichtung und/oder der erfassten Position in Abhängigkeit von dem erfassten Betätigen ermittelt werden.

In einer Ausgestaltung der Erfindung wird im Schritt c) die Orientierungsinformation mittels einer, insbesondere linearen, Regressionsanalyse der erfassten Positionen ermittelt. Dies kann eine relativ genaue Ermittlung der Orientierungsinformation ermöglichen. Anders formuliert: die Orientierung kann durch eine, insbesondere gerade, Linie beschrieben werden.

In einer Weiterbildung der Erfindung ist die Orientierungsinformation eine Himmelsrichtung des mindestens einen Abschnitts des gefällten Baums. Zusätzlich oder alternativ ist die Orientierungsinformation eine Routenführung zu einem Abholort des mindestens einen Abschnitts des gefällten Baums. Dies ermöglicht dem Forstarbeiter und/oder einem Holfahrzeug ein einfaches Holen des Abschnitts, insbesondere aus einem Wald. Insbesondere kann die Himmelsrichtung einen Wert und/oder einen Betrag aufweisen oder sein. Die Abholposition kann Koordinaten beziehungsweise einen Wert und/oder einen Betrag der Koordinaten aufweisen oder sein. Zusätzlich kann die Orientierungsinformation die Position des Abschnitts aufweisen. Die Himmelsrichtung kann in einer, insbesondere digitalen, Karte eingepflegt sein. Die Karte kann eine Wegenetz, insbesondere Rückegassen, beinhalten. Das Holfahrzeug kann ein Holzrückfahrzeug und/oder ein Schleppkran und/oder ein Traktor und/oder ein Forwarder und/oder ein Harvester sein.

Des Weiteren bezieht sich die Erfindung auf ein Forstsystem zum Ermitteln der Orientierung des mindestens einen Abschnitts des gefällten Baums. Das Forstsystem kann insbesondere zum Ausführen des zuvor beschriebenen Verfahrens ausgebildet sein. Das erfindungsgemäße Forstsystem weist ein handgetragenes Forstbearbeitungsgerät, eine Erfassungseinrichtung, eine Ermittlungseinrichtung und eine Ausgabeeinrichtung auf. Das handgetragene Forstbearbeitungsgerät ist zum Bearbeiten des mindestens einen Abschnitts des gefällten Baums ausgebildet. Das Forstbearbeitungsgerät weist ein Schneidwerkzeug auf oder ist ein solches. Das Schneidwerkzeug ist zum Entfernen von Ästen von dem mindestens einen Abschnitt und/oder zum Durchtrennen des Abschnitts ausgebildet. Die Erfassungseinrichtung ist zum Erfassen der Ausrichtung und/oder der mehreren Positionen des handgetragenen Forstbearbeitungsgeräts ausgebildet, insbesondere während des Bearbeitens mittels des handgetragenen Forstbearbeitungsgeräts. Die Ermittlungseinrichtung ist zum Ermitteln von der Orientierungsinformation betreffend die Orientierung des mindestens einen Abschnitts des gefällten Baums basierend auf der erfassten Ausrichtung und/oder den erfassten Positionen ausgebildet. Die Ausgabeeinrichtung ist zum Ausgeben der ermittelten Orientierungsinformation ausgebildet.

Das Forstsystem kann die gleichen Vorteile ermöglichen wie das zuvor beschriebene Verfahren.

Das Forstbearbeitungsgerät ist als ein handgetragenes Forstbearbeitungsgerät ausgebildet. Handgetragenes Forstbearbeitungsgerät kann bedeuten, dass das Forstbearbeitungsgerät eine maximale Masse von 50 Kilogramm (kg), insbesondere von 20 kg, insbesondere von 10 kg, aufweisen kann.

Die Erfassungseinrichtung kann an dem Forstbearbeitungsgerät angeordnet sein, insbesondere in das Forstbearbeitungsgerät integriert sein.

Die Ermittlungseinrichtung kann einen Prozessor, insbesondere eine CPU, aufweisen oder sein.

Die Ausgabeeinrichtung kann eine Anzeige und/oder einen Schallerzeuger und/oder eine Vibrationseinrichtung aufweisen oder sein.

Zusätzlich kann das Forstsystem mindestens eine Übertragungseinrichtung aufweisen, die zum Übertragen der erfassten Ausrichtung und/oder der erfassten Position und/oder der ermittelten Orientierungsinformation ausgebildet sein kann. Die mindestens eine Übertragungseinrichtung kann dazu ausgebildet sein, von der Erfassungseinrichtung und/oder zu der Ermittlungseinrichtung und/oder von der Ermittlungseinrichtung und/oder zu der Ausgabeeinrichtung zu übertragen. Insbesondere kann die mindestens eine Übertragungseinrichtung eine UMTS-, WLAN-, und/oder Bluetooth-Übertragungseinrichtung oder eine auf einer anderen Technik basierende Übertragungseinrichtung aufweisen oder sein.

Das Schneidwerkzeug kann eine Säge aufweisen oder sein, insbesondere eine Motorsäge und/oder eine Kettensäge.

In einer Weiterbildung der Erfindung weist das Forstbearbeitungsgerät die Betätigungseinrichtung auf. Das Forstsystem ist zum Erfassen eines Betätigens der Betätigungseinrichtung ausgebildet. Die Erfassungseinrichtung ist zum Erfassen der Ausrichtung und/oder der Position in Abhängigkeit von dem erfassten Betätigen ausgebildet. In anderen Worten: die Ermittlungseinrichtung kann zum Ermitteln von der Orientierungsinformation basierend auf der erfassten Ausrichtung und/oder der erfassten Position in Abhängigkeit von dem erfassten Betätigen ausgebildet sein. Insbesondere kann die Betätigungseinrichtung zum Betreiben des Forstbearbeitungsgeräts ausgebildet sein beziehungsweise ein Bearbeiten mittels des Forstbearbeitungsgeräts ermöglichen. Anders formuliert: wenn die Betätigungseinrichtung nicht betätigt wird, kann ein Bearbeiten mittels des Forstbearbeitungsgeräts nicht möglich sein. Die Betätigungseinrichtung kann einen Gashebel, eine Gashebelsperre und/oder eine Ketttenbremse aufweisen oder sein.

In einer Weiterbildung der Erfindung weist die Erfassungseinrichtung einen Kompass und/oder ein lokales Positionsbestimmungsgerät und/oder ein Satelliten-Positionsbestimmungsgerät auf. Insbesondere kann die Ausrichtung mittels des Kompasses erfasst werden. Die Position kann mittels des lokalen Positionsbestimmungsgeräts und/oder des Satelliten-Positionsbestimmungsgeräts erfasst werden. Der Kompass kann als ein elektrischer oder digitaler Kompass ausgebildet sein. Das lokale Positionsbestimmungsgerät kann auf einer oder mehreren verschiedenen Technologien basieren wie Abstandsmessungen zu Knotenpunkten, optischen Signalen, Radiowellen, magnetischen Feldern, akustischen Signalen, Ultrabreitband, Bluetooth, WLAN, Ultraschall und/oder RFID. Das lokale Positionsbestimmungsgerät kann auf Englisch als local positioning system bezeichnet werden. Das Satelliten-Positionsbestimmungsgerät kann für eines oder mehrere Satelliten-Positionsbestimmungssysteme wie NAVSTAR GPS, GLONASS, Galileo und/oder BeiDou ausgebildet sein. Zusätzlich oder alternativ kann das Satelliten-Positionsbestimmungsgerät als ein RTK-Satelliten-Positionsbestimmungsgerät (Englisch: real time kinematic) und/oder als ein differentielles Satelliten-Positionsbestimmungsgerät ausgebildet sein.

In einer Weiterbildung der Erfindung weist die Ausgabeeinrichtung ein Routenführungssystem auf. Das Routenführungssystem ist zum Ausgeben der Routenführung zu dem Abholort des mindestens einen Abschnitts des gefällten Baums ausgebildet. Insbesondere kann das Routenführungssystem als Navigationssystem bezeichnet werden. Das Routenführungssystem kann einen Kompass und/oder ein lokales Positionsbestimmungsgerät und/oder ein Satelliten-Positionsbestimmungsgerät aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: eine Oberansicht eines erfindungsgemäßen Forstsystems mit einem Forstbearbeitungsgerät während eines Bearbeitens mindestens eines Abschnitts eines gefällten Baums,
- Fig. 3: eine Seitenansicht des Forstbearbeitungsgeräts der Fig. 2 und
- Fig. 4: eine weitere Oberansicht des Forstsystems der Fig. 2 nach einem Bearbeiten.

### DETAILLIERTE BESCHREIBUNG DER AUSFÜHRUNGSBEISPIELE

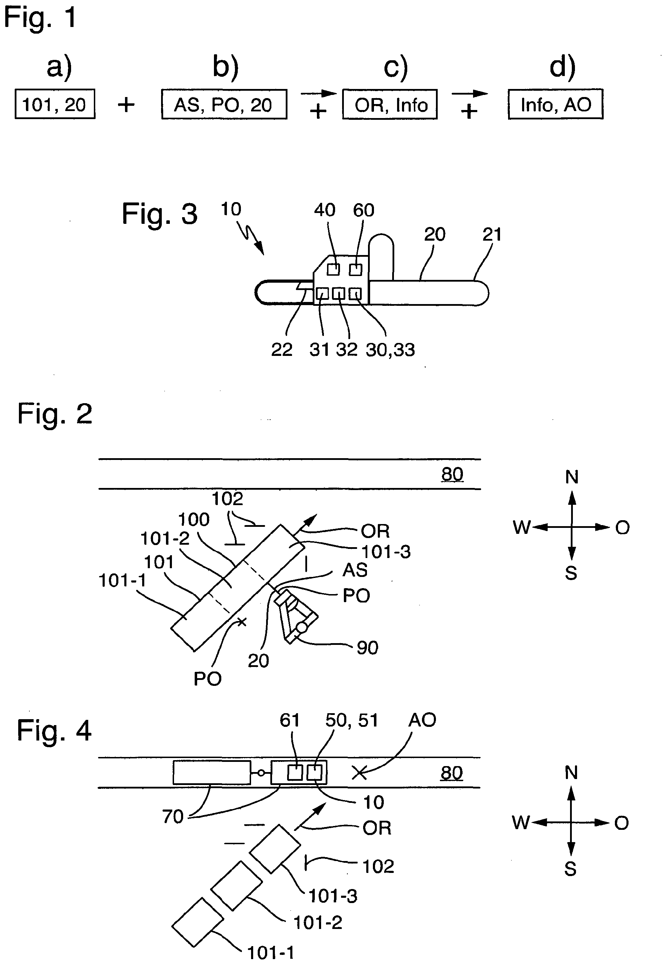

Fig. 1 zeigt ein erfindungsgemäßes Verfahren zum Ermitteln einer Orientierung OR mindestens eines Abschnitts 101 eines gefällten Baums 100. Das Verfahren weist die Schritte auf: a) Bearbeiten des mindestens einen Abschnitts 101 des gefällten Baums 100. b) Erfassen einer Ausrichtung AS und einer Position PO während des Bearbeitens, c) Ermitteln von einer Orientierungsinformation Info betreffend die Orientierung OR des mindestens einen Abschnitts 101 des gefällten Baums 100 basierend auf der erfassten Ausrichtung AS und der erfassten Position PO. d) Ausgeben der ermittelten Orientierungsinformation Info. In alternativen Ausführungsbeispielen kann im Schritte b) entweder die Ausrichtung oder die Position erfasst werden. Weiter kann in alternativen Ausführungsbeispielen im Schritt c) die Orientierungsinformation basierend auf entweder der erfassten Ausrichtung oder der erfassten Position ermittelt werden.

Fig. 2 bis 4 zeigen ein erfindungsgemäßes Forstsystem 10 zum Ermitteln der Orientierung OR des mindestens einen Abschnitts 101 des gefällten Baums 100. Das Forstsystem 10 ist insbesondere zum Ausführen des zuvor beschriebenen Verfahrens ausgebildet. Das Forstsystem 10 weist ein Forstbearbeitungsgerät 20, eine Erfassungseinrichtung 30, eine Ermittlungseinrichtung 40 und eine Ausgabeeinrichtung 50 auf. Das Forstbearbeitungsgerät 20 ist zum Bearbeiten des mindestens einen Abschnitts 101 des gefällten Baums 100 ausgebildet. Die Erfassungseinrichtung 30 ist zum Erfassen der Ausrichtung AS und/oder der Position PO des Forstbearbeitungsgeräts 20 ausgebildet. Die Ermittlungseinrichtung 40 ist zum Ermitteln von der Orientierungsinformation Info betreffend die Orientierung OR des mindestens einen Abschnitts 101 des gefällten Baums 100 basierend auf der erfassten Ausrichtung AS und/oder der erfassten Position PO ausgebildet. Die Ausgabeeinrichtung 50 ist zum Ausgeben der ermittelten Orientierungsinformation Info ausgebildet. In alternativen Ausführungsbeispielen kann die Erfassungseinrichtung zum Erfassen entweder der Ausrichtung oder der Position ausgebildet sein. Weiter kann in alternativen Ausführungsbeispielen die Ermittlungseinrichtung zum Ermitteln von der Orientierungsinformation basierend auf entweder der erfassten Ausrichtung oder der erfassten Position ausgebildet sein. Im gezeigten Ausführungsbeispiel ist die Erfassungseinrichtung 30 an dem Forstbearbeitungsgerät 20 angeordnet, insbesondere in das Forstbearbeitungsgerät 20 integriert. In alternativen Ausführungsbeispielen kann die Erfassungseinrichtung woanders angeordnet sein, insbesondere an einem Forstarbeiter.

Entsprechend wird im Schritt a) der mindestens eine Abschnitt 101 des gefällten Baums 100 mittels des Forstbearbeitungsgeräts 20 bearbeitet. Im Schritt b) werden die Ausrichtung AS und die Position PO des Forstbearbeitungsgeräts 20 erfasst.

Im Detail weist das Forstbearbeitungsgerät 20 eine Betätigungseinrichtung 22 in Form eines Gashebels auf, wie in Fig. 3 zu erkennen. Das Forstsystem 10 ist zum Erfassen eines Betätigens der Betätigungseinrichtung 22 ausgebildet. Die Erfassungseinrichtung 30 ist zum Erfassen der Ausrichtung AS und der Position PO in Abhängigkeit von dem erfassten Betätigen ausgebildet.

Entsprechend weist das Verfahren den Schritt auf: Erfassen des Betätigens des Forstbearbeitungsgeräts 20. Im Schritt b) werden die Ausrichtung AS und die Position PO in Abhängigkeit von dem erfassten Betätigen erfasst.

Des Weiteren ist das Forstbearbeitungsgerät 20 ein Schneidwerkzeug 21 in Form einer Säge, insbesondere einer motorangetriebenen Kettensäge. Das Schneidwerkzeug 21 ist zum Entfernen von Ästen 102 von dem mindestens einen Abschnitt 101 und zum Durchtrennen des Abschnitts 101 ausgebildet. In alternativen Ausführungsbeispielen kann das Schneidwerkzeug entweder zum Entfern von Ästen von dem Abschnitt oder zum Durchtrennen des Abschnitts ausgebildet sein.

Außerdem weist die Erfassungseinrichtung 30 einen Kompass 31 und ein lokales Positionsbestimmungsgerät 32 und ein Satelliten-Positionsbestimmungsgerät 33 auf. In alternativen Ausführungsbeispielen kann die Erfassungseinrichtung entweder den Kompass oder das lokale Positionsbestimmungsgerät oder das Satelliten-Positionsbestimmungsgerät auf weisen.

Im gezeigten Ausführungsbeispiel der Fig. 2 hat der Forstarbeiter 90 die Äste 102 von dem Abschnitt 101 mittels des Forstbearbeitungsgeräts 20 bereits entfernt. Der Forstarbeiter 90 soll den Abschnitt 101 in mindestens drei Unterabschnitte 101-1, 101-2, 101-3 mittels des Forstbearbeitungsgeräts 20 durchtrennen, insbesondere durch Trennschnitte, wie in Fig. 2 durch gestrichelte Linien angedeutet.

Während des Durchtrennens des Abschnitts 101 in die Unterabschnitte 101-1, 101-2, 101-3 wird die Ausrichtung AS des Forstbearbeitungsgeräts 20 erfasst, insbesondere mittels des Kompasses 31. Im Detail weist das Schneidwerkzeug 21 in Form der Säge eine Führungsschiene beziehungsweise ein Kettenschwert auf. Das Schneidwerkzeug 21 ist während des Durchtrennens derart ausgerichtet, dass eine Ebene der Führungsschiene beziehungsweise eine Ebene der Trennschnitte senkrecht zu der Orientierung OR des Abschnitts 101 verläuft. Im gezeigten Ausführungsbeispiel ist die Orientierung OR in Fig. 2 und 4 nach rechts oben beziehungsweise in Himmelsrichtung Nordosten.

Im gezeigten Ausführungsbeispiel ist das Forstsystem 10 dazu ausgebildet, dass der Forstarbeiter 90 mitteilen oder auswählen kann, dass ein Durchtrennen beziehungsweise ein Trennschnitt, insbesondere aktuell, ausgeführt wird.

Des Weiteren werden während des Durchtrennens des Abschnitts 101 in die Unterabschnitte 101-1, 101-2, 101-3 mehrere Positionen PO des Forstbearbeitungsgeräts 20 erfasst, insbesondere mittels des lokalen Positionsbestimmungsgeräts 32 und/oder des Satelliten-Positionsbestimmungsgeräts 33. Im Detail sind die mehreren Positionen PO, insbesondere der Trennschnitte, entlang des Abschnitts 101 mit der Orientierung OR.

Entsprechend wird im Schritt c) die Orientierungsinformation Info betreffend die Orientierung OR des mindestens einen Abschnitts 101 des gefällten Baums 100 basierend auf den erfassten Positionen PO ermittelt, insbesondere mittels der Ermittlungseinrichtung 40. Im Detail wird im Schritt c) die Orientierungsinformation Info mittels einer linearen Regressionsanalyse der erfassten Positionen PO ermittelt.

Im gezeigten Ausführungsbeispiel ist die Ermittlungseinrichtung 40 an dem Forstbearbeitungsgerät 20 angeordnet, insbesondere in das Forstbearbeitungsgerät 20 integriert. In alternativen Ausführungsbeispielen kann die Ermittlungseinrichtung woanders angeordnet sein, insbesondere an dem Forstarbeiter oder an beziehungsweise in einem Holfahrzeug.

Des Weiteren ist im gezeigten Ausführungsbeispiel die Orientierungsinformation Info eine Routenführung zu einem Abholort AO, insbesondere auf einer Rückegasse 80, des mindestens einen Abschnitts 101, insbesondere der Unterabschnitte 101-1, 101-2, 101-3, des gefällten Baums 100. In alternativen Ausführungsbeispielen kann die Orientierungsinformation zusätzlich oder alternativ eine Himmelsrichtung des mindestens einen Abschnitts des gefällten Baums sein.

Außerdem weist die Ausgabeeinrichtung 50 ein Routenführungssystem 51 auf. Das Routenführungssystem 51 ist zum Ausgeben der Routenführung zu dem Abholort AO des mindestens einen Abschnitts 101 des gefällten Baums 100 ausgebildet. Im gezeigten Ausführungsbeispiel ist die Ausgabeeinrichtung 50 beziehungsweise sein Routenführungssystem 51 an dem Holfahrzeug 70 zum Holen des Abschnitts 101 angeordnet, insbesondere in das Holfahrzeug 70 integriert. In alternativen Ausführungsbeispielen kann die Ausgabeeinrichtung woanders angeordnet sein, insbesondere an beziehungsweise in dem Forstbearbeitungsgerät oder an dem Forstarbeiter.

Die Ausgabeeinrichtung 50 beziehungsweise sein Routenführungssystem 51 weist eine nicht dargestellte Anzeige und einen nicht dargestellten Schallerzeuger auf. In alternativen Ausführungsbeispielen kann die Ausgabeeinrichtung beziehungsweise sein Routenführungssystem entweder die Anzeige oder den Schallerzeuger aufweisen. Weiter kann in alternativen Ausführungsbeispielen die Ausgabeeinrichtung beziehungsweise sein Routenführungssystem zusätzlich oder alternativ eine Vibrationseinrichtung aufweisen.

Entsprechend wird im Schritt d) die Orientierungsinformation Info optisch, insbesondere mittels der Anzeige, und akustisch, insbesondere mittels des Schallerzeugers, ausgegeben, insbesondere an einen Fahrer des Holfahrzeugs 70. In alternativen Ausführungsbeispielen kann die Orientierungsinformation entweder optisch oder akustisch ausgegeben werden. Weiter kann in alternativen Ausführungsbeispielen die Orientierungsinformation zusätzlich oder alternativ haptisch ausgegeben werden, insbesondere mittels einer Vibrationseinrichtung.

Weiter weist das Forstsystem 10 mindestens eine Übertragungseinrichtung 60, 61 auf, im gezeigten Ausführungsbeispiel zwei Übertragungseinrichtungen 60, 61. In alternativen Ausführungsbeispielen kann das Forstsystem nur eine einzige oder mindestens drei Übertragungseinrichtungen aufweisen. Die ein der zwei Übertragungseinrichtungen 60 ist an dem Forstbearbeitungsgerät 20 angeordnet, insbesondere in das Forstbearbeitungsgerät 20 integriert. Die andere der zwei Übertragungseinrichtungen 61 ist an dem Holfahrzeug 70 angeordnet, insbesondere in das Holfahrzeug 70 integriert. In alternativen Ausführungsbeispielen kann die mindestens eine Übertragungseinrichtung woanders angeordnet sein, insbesondere an dem Forstarbeiter.

Die Übertragungseinrichtungen 60, 61 sind zum Zusammenwirken miteinander und zum Übertragen der ermittelten Orientierungsinformation Info ausgebildet. In alternativen Ausführungsbeispielen können die Übertragungseinrichtungen zusätzlich oder alternativ zum Übertragen der erfassten Ausrichtung und/oder der erfassten Position ausgebildet sein.

Entsprechend wird die ermittelte Orientierungsinformation Info übertragen, insbesondere von der Ermittlungseinrichtung 40 zu der Ausgabeeinrichtung 50. In alternativen Ausführungsbeispielen können/kann zusätzlich die erfasste Ausrichtung und/oder die erfasste Position übertragen werden, insbesondere von der Erfassungseinrichtung zu der Ermittlungseinrichtung.

Wie die gezeigten und oben erläuterten Ausführungsbeispiele deutlich machen, stellt die Erfindung ein vorteilhaftes Verfahren zum Ermitteln einer Orientierung mindestens eines Abschnitts eines gefällten Baums und ein vorteilhaftes Forstsystem zum Ermitteln einer Orientierung mindestens eines Abschnitts eines gefällten Baums bereit, das jeweils benutzerfreundlich ist und ein einfaches Weiterverarbeiten des Abschnitts ermöglicht.

## Patentansprüche

1. Verfahren zum Ermitteln einer Orientierung (OR) mindestens eines Abschnitts (101) eines gefällten Baums (100), wobei das Verfahren die Schritte aufweist:
a) Bearbeiten des mindestens einen Abschnitts (101) des gefällten Baums (100), wobei im Schritt a) der mindestens eine Abschnitt (101) des gefällten Baums (100) mittels eines handgetragenen Forstbearbeitungsgeräts (20) bearbeitet wird, wobei das Forstbearbeitungsgerät (20) ein Schneidwerkzeug (21) aufweist, das zum Entfernen von Ästen (102) von dem mindestens einen Abschnitt (101) und/oder zum Durchtrennen des Abschnitts ausgebildet ist, wobei im Schritt a) der mindestens eine Abschnitt des gefällten Baums durch ein Entfernen von Ästen von dem Abschnitt und/oder durch ein Durchtrennen des Abschnitts bearbeitet wird,
b) Erfassen einer Ausrichtung (AS) und/oder mehrerer Positionen (PO) während des Bearbeitens, wobei im Schritt b) die Ausrichtung (AS) und/oder die Positionen (PO) des handgetragenen Forstbearbeitungsgeräts erfasst werden/wird und/oder wobei die Ausrichtung eine Ausrichtung eines den Abschnitt bearbeitenden Forstarbeiters ist und/oder wobei die Positionen Positionen des den Abschnitt bearbeitenden Forstarbeiters sind,
c) Ermitteln von einer Orientierungsinformation (Info) betreffend die Orientierung (OR) des mindestens einen Abschnitts des gefällten Baums basierend auf der erfassten Ausrichtung und/oder den erfassten Positionen und
d) Ausgeben der ermittelten Orientierungsinformation.

2. Verfahren nach Anspruch 1,
- wobei das Verfahren den Schritt aufweist: Erfassen eines Betätigens des Forstbearbeitungsgeräts (20) und
- wobei im Schritt b) die Ausrichtung (AS) und/oder die Position (PO) in Abhängigkeit von dem erfassten Betätigen erfasst werden/wird.

3. Verfahren nach Anspruch 1 oder 2,
- wobei im Schritt c) die Orientierungsinformation (Info) mittels einer Regressionsanalyse der erfassten Positionen (PO) ermittelt wird.

4. Verfahren nach einem der vorhergehenden Ansprüche,
- wobei die Orientierungsinformation (Info) eine Himmelsrichtung des mindestens einen Abschnitts (101) des gefällten Baums (100) ist oder
- wobei die Orientierungsinformation (Info) eine Routenführung zu einem Abholort (AO) des mindestens einen Abschnitts des gefällten Baums ist.

5. Forstsystem (10) zum Ermitteln einer Orientierung (OR) mindestens eines Abschnitts (101) eines gefällten Baums (100), aufweisend:
- ein handgetragenes Forstbearbeitungsgerät (20), das zum Bearbeiten des mindestens einen Abschnitts (101) des gefällten Baums (100) ausgebildet ist, wobei das Forstbearbeitungsgerät (20) ein Schneidwerkzeug (21) aufweist, das zum Entfernen von Ästen (102) von dem mindestens einen Abschnitt (101) und/oder zum Durchtrennen des Abschnitts ausgebildet ist,
- eine Erfassungseinrichtung (30), die zum Erfassen einer Ausrichtung (AS) und/oder mehrerer Positionen (PO) des handgetragenen Forstbearbeitungsgeräts ausgebildet ist,
- eine Ermittlungseinrichtung (40), die zum Ermitteln von einer Orientierungsinformation (Info) betreffend die Orientierung (OR) des mindestens einen Abschnitts des gefällten Baums basierend auf der erfassten Ausrichtung und/oder den erfassten Positionen ausgebildet ist, und
- eine Ausgabeeinrichtung (50), die zum Ausgeben der ermittelten Orientierungsinformation ausgebildet ist.

6. Forstsystem (10) nach Anspruch 5,
- wobei das Forstbearbeitungsgerät (20) eine Betätigungseinrichtung (22) aufweist,
- wobei das Forstsystem (10) zum Erfassen eines Betätigens der Betätigungseinrichtung (22) ausgebildet ist und
- wobei die Erfassungseinrichtung (30) zum Erfassen der Ausrichtung (AS) und/oder der Position (PO) in Abhängigkeit von dem erfassten Betätigen ausgebildet ist.

7. Forstsystem (10) nach einem der Ansprüche 5 bis 6,
- wobei die Erfassungseinrichtung (30) einen Kompass (31) und/oder ein lokales Positionsbestimmungsgerät (32) und/oder ein Satelliten-Positionsbestimmungsgerät (33) aufweist.

8. Forstsystem (10) nach einem der Ansprüche 5 bis 7,
- wobei die Ausgabeeinrichtung (50) ein Routenführungssystem (51) aufweist, das zum Ausgeben einer Routenführung zu einem Abholort (AO) des mindestens einen Abschnitts (101) des gefällten Baums (100) ausgebildet ist.

## Claims

1. Method for obtaining an orientation (OR) of at least one section (101) of a felled tree (100), the method comprising the steps:
a) treating the at least one section (101) of the felled tree (100), wherein in step a) the at least one section (101) of the felled tree (100) is treated using a hand-held forestry treatment apparatus (20), wherein the forestry treatment apparatus (20) includes a cutting tool (21) configured to remove branches (102) from the at least one section (101) and/or to sever said section, wherein in step a) the at least one section of the felled tree is treated by a removal of branches from the section and/or by severing the section,
b) identifying an alignment (AS) and/or a plurality of positions (PO) during the treatment, wherein in step b) the alignment (AS) and/or the positions (PO) of the hand-held forestry treatment apparatus are/is identified and/or wherein the alignment is an alignment of a forestry worker treating the section and/or wherein the positions are positions of the forestry worker treating the section,
c) obtaining orientation information (info) related to the orientation (OR) of the at least one section of the felled tree based on the identified alignment and/or the identified positions, and
d) outputting the obtained orientation information.

2. Method according to claim 1,
- wherein the method comprises the step: identifying an operation of the forestry treatment apparatus (20), and
- wherein in step b) the alignment (AS) and/or the position (PO) are/is identified as a function of the identified operation.

3. Method according to claim 1 or 2,
- wherein in step c) the orientation information (info) is obtained using a regression analysis of the identified positions (PO).

4. Method according to any of the preceding claims,
- wherein the orientation information (info) is a cardinal direction of the at least one section (101) of the felled tree (100), or
- wherein the orientation information (info) is a route guidance to a collection location (AO) of the at least one section of the felled tree.

5. Forestry system (10) for obtaining an orientation (OR) of at least one section (101) of a felled tree (100), comprising:
- a hand-held forestry treatment apparatus (20) configured to treat the at least one section (101) of the felled tree (100), wherein the forestry treatment apparatus (20) includes a cutting tool (21) configured to remove branches (102) from the at least one section (101) and/or to sever said section,
- an identification device (30) configured to identify an alignment (AS) and/or a plurality of positions (PO) of the hand-held forestry treatment apparatus,
- an obtaining device (40) configured to obtain orientation information (info) related to the orientation (OR) of the at least one section of the felled tree based on the identified alignment and/or the identified positions, and
- an output device (50) configured to output the obtained orientation information.

6. Forestry system (10) according to claim 5,
- wherein the forestry treatment apparatus (20) includes an operating device (22),
- wherein the forestry system (10) is configured to identify an operation of the operating device (22), and
- wherein the identification device (30) is configured to identify the alignment (AS) and/or the position (PO) as a function of the identified operation.

7. Forestry system (10) according to any of claims 5 to 6,
- wherein the identification device (30) includes a compass (31) and/or a local position determination device (32) and/or a satellite position determination device (33).

8. Forestry system (10) according to any of claims 5 to 7,
- wherein the output device (50) includes a route guidance system (51) configured to output a route guidance to a collection location (AO) of the at least one section (101) of the felled tree (100).

## Revendications

1. Procédé de détermination d'une orientation (OR) d'au moins une portion (101) d'un arbre abattu (100), le procédé comportant les étapes suivantes :
a) traiter l'au moins une portion (101) de l'arbre abattu (100), l'au moins une portion (101) de l'arbre abattu (100) étant traitée à l'étape a) à l'aide d'un appareil de traitement forestier à main (20), l'appareil de traitement forestier (20) comportant un outil de coupe (21) qui est conçu pour enlever les branches (102) de l'au moins une portion (101) et/ou pour tronçonner la portion, l'au moins une portion de l'arbre abattu étant traitée à l'étape a) par enlèvement des branches de la portion et/ou tronçonnage de la portion,
b) détecter une orientation (AS) et/ou plusieurs positions (PO) pendant le traitement, l'orientation (AS) et/ou les positions (PO) de l'appareil de traitement forestier à main étant détectés à l'étape b) et/ou l'orientation étant une orientation d'un ouvrier forestier traitant la portion et/ou les positions étant des positions de l'ouvrier forestier traitant la portion,
c) déterminer une information d'orientation (Info) relatives à l'orientation (OR) de l'au moins une portion de l'arbre abattu sur la base de l'orientation détectée et/ou des positions détectées et
d) délivrer les informations d'orientation déterminées.

2. Procédé selon la revendication 1,
- le procédé comportant l'étape suivante : détecter un actionnement de l'appareil de traitement forestier (20) et
- l'orientation (AS) et/ou la position (PO) étant détectées à l'étape b) en fonction de l'actionnement détecté.

3. Procédé selon la revendication 1 ou 2, l'information d'orientation (Info) étant déterminée à l'étape c) au moyen d'une analyse de régression des positions détectées (PO).

4. Procédé selon l'une des revendications précédentes,
- l'information d'orientation (Info) étant une direction cardinale d'au moins une portion (101) de l'arbre abattu (100) ou
- l'information d'orientation (Info) étant un guidage d'itinéraire vers un emplacement de ramassage (AO) d'au moins une portion de l'arbre abattu.

5. Système forestier (10) destiné à déterminer une orientation (OR) d'au moins une portion (101) d'un arbre abattu (100), ledit système comprenant :
- un appareil de traitement forestier à main (20) qui est conçu pour traiter au moins une portion (101) de l'arbre abattu (100), l'appareil de traitement forestier (20) comportant un outil de coupe (21) qui est conçu pour enlever des branches (102) de l'au moins une portion (101) et/ou pour tronçonner la portion,
- un dispositif de détection (30) qui est conçu pour détecter une orientation (AS) et/ou plusieurs positions (PO) de l'appareil de traitement forestier à main,
- un dispositif de détermination (40) qui est conçu pour déterminer une information d'orientation (Info) relative à l'orientation (OR) d'au moins une portion de l'arbre abattu sur la base de l'orientation détectée et/ou des positions détectées, et
- un dispositif de délivrance (50) qui est conçu pour délivrer l'information d'orientation déterminée.

6. Système forestier (10) selon la revendication 5,
- l'appareil de traitement forestier (20) comportant un dispositif d'actionnement (22),
- le système forestier (10) étant conçu pour détecter un actionnement du dispositif d'actionnement (22) et
- le dispositif de détection (30) étant conçu pour détecter l'orientation (AS) et/ou la position (PO) en fonction de l'actionnement détecté.

7. Système forestier (10) selon l'une des revendications 5 à 6,
- le dispositif de détection (30) comportant une boussole (31) et/ou un dispositif de détermination de position local (32) et/ou un dispositif de détermination de de position par satellite (33).

8. Système forestier (10) selon l'une des revendications 5 à 7,
- le dispositif de délivrance (50) comportant un système de guidage d'itinéraire (51) qui est conçu pour délivrer un guidage d'itinéraire à un emplacement de ramassage (AO) d'au moins une portion (101) de l'arbre abattu (100).
